# EUROPEAN PATENT APPLICATION

(11) **EP 3 075 811 A1**
(43) Date of publication of application: **05.10.2016**
(21) Application number: 14866043.4
(22) Date of filing: 13.11.2014
(51) Int. Cl.: C09J 175/04, C09J 7/00, C09J 11/04, C09J 175/06

(54) **RESIN COMPOSITION FOR GAS BARRIER ADHESIVE, AND ADHESIVE**

(30) Priority: 27.11.2013 JP 2013244919
(71) Applicant: DIC Corporation, Tokyo 174-8520 (JP)
(72) Inventor: SHIMOGUCHI Mutsuhiro, Tokyo 174-8520 (JP); OOKUBO Tomoo, Tokyo 174-8520 (JP)
(74) Representative: Adam, Holger
(86) International application number: PCT/JP2014/080045
(87) International publication number: WO 2015/079924

(57) **Abstract**

It is an object of the present invention to provide a resin composition for an adhesive having high gas barrier properties and laminate strength.

A resin composition for a gas barrier adhesive contains a resin (A) having two or more hydroxy groups per molecule and a polyisocyanate (B) having two or more isocyanate groups, in which the polyisocyanate (B) is a mixture of a tri- or higher-valent polyisocyanate compound (b1) having an aromatic ring in its molecule and a polyisocyanate compound (b2) having no aromatic ring in its molecule.

## Description

### Technical Field

The present invention relates to a resin composition for gas barrier adhesive, an adhesive containing the resin composition, and a gas barrier film.

### Background Art

Composite film materials produced by the multilayer lamination of, for example, various plastic films, metal-deposited films, glass-deposited films, or metal foil, have been used as food packaging materials. As a method for laminating these various plastic films, metal-deposited films, glass-deposited films, metal foil, or the like, there is a technique called dry lamination, the technique including applying an adhesive to a surface of a material, removing a solvent by evaporation, and laminating the material and another material by heating under pressure. By employing this technique, freely-selected films can be laminated into composite films with performance appropriate to intended purposes. Thus, this technique is widely used for producing food packaging materials required to have high performance.

The adhesive used here is required to have high performance, i.e., (1) adhesion to plastic films, aluminum-deposited films, alumina-deposited films, silica-deposited films, and aluminum foil, (2) initial adhesion to prevent tunneling, (3) the curing rate of the adhesive, (4) the pot life, (5) resistance to the content, and (6) boiling and retort resistance. More emphasis has recently been placed on (7) low-odor properties, in which various impurities originating from the adhesive do not move to the content and in which the flavor and the taste of the content are not adversely affected.

The adhesive used here is mainly a two-component reaction-type polyurethane-based adhesive. The adhesive mainly contains a polyol component having a hydroxy group at an end of a polymer and a polyisocyanate component having an isocyanate group. The hydroxy group and the isocyanate group are reacted to form a urethane bond, so that the adhesive is cured. Specifically, known are combinations of a polyisocyanate compound with a polyether polyurethane polyol, or a polyester polyol or polyester polyurethane polyol in which a polyester bond concentration originating from an aliphatic acid is 2 to 4 mg equivalent/g with respect to the solid content of the adhesive, or a mixture of two or more of these (PTL 1).

In recent years, the production of environmentally friendly products has been tried. Adhesive manufacturers have intensively developed high-solid-type or non-solvent-type adhesives. It is desired to achieve a good balance between initial adhesiveness, an adhesive strength, good heat resistance and good resistance to the content, printability, and so forth.

Regarding background art, for example, PTL 2 states a composition prepared from a polyester polyol, a polyisocyanate, and an inorganic material but does not state that an adhesive resin has barrier performance. The inorganic material is silicon oxide or aluminum oxide and has a particle size less than 1 µm and preferably 5 to 50 nm.

PTL 3 states a composition prepared from a polyester polyol, a polyisocyanate, and an inorganic material but does not state that an adhesive resin has barrier performance. PTL 3 states montmorillonite having cations between layers as the inorganic material. This is different from the fact that an inorganic material used in the present invention is nonionic between layers. Furthermore, in the related art, no description is given of an example or data related to barrier properties. Thus, there is no specific evidence that it has barrier properties.

PTL 4 states that a tri- or higher-functional material is contained in an amount of 7% by weight or more to ensure barrier properties. However, a PET/CPP structure, which is typical in a retort, is described, and the structure does not have laminate strength sufficient for practical use.

In a technique described in PTL 5, a silane coupling agent or the like is used to improve adhesion to a metal-deposited film. However, no description is given of an adhesive itself having barrier properties.

In a technique described in PTL 6, a diisocyanate contains an aromatic ring, thus resulting in good oxygen barrier properties. However, a coating film is less flexible, thus failing to ensure sufficient adhesive strength.

### Citation List

### Patent Literature

PTL 1: Japanese Unexamined Patent Application Publication No. 2000-290631
PTL 2: Japanese Patent No. 3829526
PTL 3: Japanese Patent No. 3906095
PTL 4: Japanese Patent No. 4054972
PTL 5: Japanese Patent No. 4226852
PTL 6: Japanese Patent Application No. 2012-253222

### Summary of Invention

### Technical Problem

In light of the foregoing background art, it is an object of the present invention to provide a resin composition for an adhesive having high gas barrier properties and laminate strength for a metal-based film. Solution to Problem

The inventors have solved the foregoing problems by the use of a resin composition for a gas barrier adhesive, the resin composition containing a resin (A) having two or more hydroxy groups per molecule and a polyisocyanate (B) having two or more isocyanate groups, in which the polyisocyanate (B) is a mixture of a tri- or higher-valent polyisocyanate compound (b1) having an aromatic ring in its molecule and a polyisocyanate compound (b2) having no aromatic ring in its molecule.

### Advantageous Effects of Invention

According to the present invention, it is possible to provide a resin composition for an adhesive having high gas barrier properties and laminate strength for a metal-based film.

### Description of Embodiments

To solve the foregoing problems, the present invention includes the following items:
1. A resin composition for a gas barrier adhesive includes a resin (A) having two or more hydroxy groups per molecule and a polyisocyanate (B) having two or more isocyanate groups,
   in which the polyisocyanate (B) is a mixture of a tri-or higher-valent polyisocyanate compound (b1) having an aromatic ring in its molecule and a polyisocyanate compound (b2) having no aromatic ring in its molecule.
2. In the resin composition for a gas barrier adhesive described in item 1, the polyisocyanate compound (b2) is a diisocyanate compound.
3. In the resin composition for a gas barrier adhesive described in item 1 or 2, the resin (A) has a main skeletal structure composed of a polyester, a polyester polyurethane, a polyether, or a polyether polyurethane.
4. In the resin composition for a gas barrier adhesive described in any one of items 1 to 3, the resin (A) has an aromatic ring.
5. In the resin composition for a gas barrier adhesive described in item 4, the resin (A) has a main skeletal structure composed of a polyester or a polyester polyurethane, and
   an ortho-oriented aromatic dicarboxylic acid or its anhydride accounts for 70 to 100% by mass of the total amount of a polyvalent carboxylic acid component serving as a monomer component constituting the polyester.
6. In the resin composition for a gas barrier adhesive described in item 5, the ortho-oriented aromatic dicarboxylic acid or its anhydride is at least one selected from the group consisting of ortho-phthalic acid and its anhydride, naphthalene-2,3-dicarboxylic acid and its anhydride, naphthalene-1,2-dicarboxylic acid and its anhydride, anthraquinone-2,3-dicarboxylic acid and its anhydride, and 2,3-anthracene dicarboxylic acid and its anhydride.
7. In the resin composition for a gas barrier adhesive described in any one of items 1 to 3, the resin (A) is a polyester polyol (A1) having at least one carboxy group and two or more hydroxy groups, the polyester polyol (A1) being prepared by allowing a polyester polyol having three or more hydroxy groups to react with a carboxylic anhydride or a polycarboxylic acid.
8. In the resin composition for a gas barrier adhesive described in item 7, the polyester polyol (A1) has a hydroxyl value of 20 to 250 and an acid value of 20 to 200.
9. In the resin composition for a gas barrier adhesive described in any one of items 1 to 3, the resin (A) is a polyester polyol (A2) having a polymerizable carbon-carbon double bond in its molecule.
10. In the resin composition for a gas barrier adhesive described in item 9, a monomer component constituting the polyester polyol (A2) and having a polymerizable carbon-carbon double bond is maleic acid, maleic anhydride, or fumaric acid.
11. In the resin composition for a gas barrier adhesive described in item 9 or 10, the proportion of a monomer component having a polymerizable carbon-carbon double bond is 5 to 60 parts by mass with respect to 100 parts by mass of the total amount of a monomer component constituting the polyester polyol (A2).
12. In the resin composition for a gas barrier adhesive described in any one of items 1 to 3, the resin (A) is a polyester polyol (A3) represented by general formula (1): 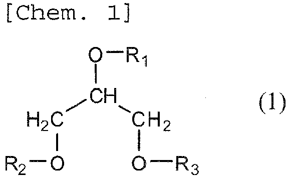 (where in formula (1), R₁ to R₃ each independently represent a hydrogen atom or a group represented by general formula (2) : 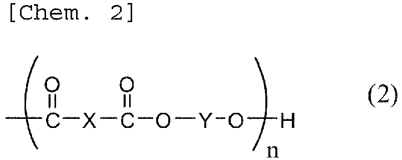 (where in formula (2), n represents an integer of 1 to 5, X represents an optionally substituted arylene group selected from the group consisting of a 1,2-phenylene group, a 1,2-naphthylene group, a 2,3-naphthylene group, a 2,3-anthraquinonediyl group, and a 2,3-anthracenediyl group, and Y represents an alkylene group having 2 to 6 carbon atoms), in which at least one of R₁ to R₃ represents the group represented by general formula (2)).
13. In the resin composition for a gas barrier adhesive described in item 12, 5% by mass or more of glycerol residues of the polyester polyol (A3) represented by general formula (1) are contained in an oxygen-barrier polyester resin composition.
14. In the resin composition for a gas barrier adhesive described in any one of items 1 to 3, the resin (A) is a polyester polyol (A4) prepared by polycondensation of a polyvalent carboxylic acid component containing at least one of an ortho-oriented aromatic dicarboxylic acid and its anhydride and a polyhydric alcohol component containing at least one selected from the group consisting of ethylene glycol, propylene glycol, butylene glycol, neopentyl glycol, and cyclohexanedimethanol.
15. In the resin composition for a gas barrier adhesive described in item 14, the ortho-oriented aromatic dicarboxylic acid or its anhydride is at least one of a polyvalent carboxylic acid and its anhydride selected from the group consisting of ortho-phthalic acid and its anhydride, naphthalene-2,3-dicarboxylic acid and its anhydride, naphthalene-1,2-dicarboxylic acid and its anhydride, anthraquinone-2,3-dicarboxylic acid and its anhydride, and 2,3-anthracene dicarboxylic acid and its anhydride.
   In the resin composition for a gas barrier adhesive described in any one of items 1 to 3, the resin (A) is a polyester polyol (A5) having an isocyanuric ring represented by general formula (3): 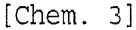 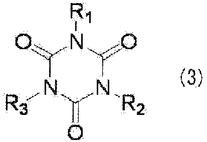 (where in general formula (3), R₁ to R₃ each independently represent -(CH₂)ₙ₁-OH (where n1 represents an integer of 2 to 4) or a group represented by general formula (4): 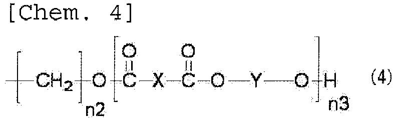 (where in general formula (4), n2 represents an integer of 2 to 4, n3 represents an integer of 1 to 5, X represents an optionally substituted arylene group selected from the group consisting of a 1,2-phenylene group, a 1,2-naphthylene group, a 2,3-naphthylene group, a 2,3-anthraquinonediyl group, and a 2,3-anthracenediyl group, and Y represents an alkylene group having 2 to 6 carbon atoms), in which at least one of R₁, R₂, and R₃ represents a group represented by general formula (4)).
17. In the resin composition for a gas barrier adhesive described in any one of items 1 to 5, the tri- or higher-valent polyisocyanate compound (b1) is selected from the group consisting of at least one of a monomer and an oligomer of a compound selected from meta-xylene diisocyanate, toluene diisocyanate, and methylphenylethane diisocyanate, and reaction products of these isocyanates with alcohols each having two or more hydroxy groups.
18. In the resin composition for a gas barrier adhesive described in any one of items 1 to 17, the polyisocyanate compound (b2) having no aromatic ring in its molecule is selected from the group consisting of at least one diisocyanate selected from hexamethylene diisocyanate, isophorone diisocyanate, norbornane diisocyanate, and hydrogenated products of meta-xylene diisocyanate, toluene diisocyanate, methylphenylethane diisocyanate, and naphthalene-1,5-diisocyanate; reaction products (allophanate group-containing polyisocyanates) with monovalent alcohols; and reaction products with alcohols each having two hydroxy groups.
19. The resin composition for a gas barrier adhesive described in any one of items 1 to 18 further contains a plate-like inorganic compound.
20. In the resin composition for a gas barrier adhesive described in item 19, the plate-like inorganic compound is nonionic between layers or non-swellable in water.
21. In the resin composition for a gas barrier adhesive described in item 19 or 20, the plate-like inorganic compound contains particles having an average particle size of 0.1 µm or more.
22. An adhesive contains the resin composition for a gas barrier adhesive described in items 1 to 21.
23. A gas barrier film includes the adhesive described in item 22.

### [Resin (A) having two or more hydroxy groups]

The resin (A) used in the present invention substantially has two or more hydroxy groups and a number-average molecular weight (Mn) of 400 to 3000. The molecular weight is smaller than a molecular weight range of commonly-used dry laminate adhesives of 5,000 to 10,000. Thus, the time required for synthesis is advantageously short. Furthermore, after the synthesis, a process for preparing an adhesive can be advantageously simplified by virtue of easy transportation. The total solid content of the resin (A) and the polyisocyanate (B) having two or more isocyanate groups is particularly preferably 40% by mass or more with respect to the total mass of the resin composition for an adhesive because low VOCs during a laminating operation is achieved, which is one of the objectives of the present invention.

Examples of the resin (A) include polyester diols, polyether diols, and acrylic diols. To impart a gas barrier function, which is an important additional function, the resin (A) is most preferably a polyester diol (a0). The polyester diol (a0) is a polyester diol synthesized from a polyol component (a1) and a polycarboxylic acid component (a2), and the polyester diol substantially having two hydroxy groups.

### (Diol component (a1))

Specific examples of a diol component (a1) used to synthesize the polyester diol (a0) used in the present invention include aliphatic diols, such as ethylene glycol, propylene glycol, butylene glycol, neopentyl glycol, cyclohexanedimethanol, 1,5-pentanediol, 3-methyl-1,5-pentanediol, 1,6-hexanediol, methylpentanediol, dimethylbutanediol, butylethylpropanediol, diethylene glycol, triethylene glycol, tetraethylene glycol, dipropylene glycol, and tripropylene glycol; and ethylene oxide-extended products and hydrogenated products of hydroquinone, resorcinol, catechol, naphthalenediol, biphenol, bisphenol A, bisphenol F, and tetramethylbiphenol. Polycondensation reactions of the diol components and dicarboxylic acid may be performed by commonly known methods.

In the case of imparting the gas barrier function serving as an additional function to an adhesive layer composed of the adhesive of the present invention, ethylene glycol, propylene glycol, butylene glycol, neopentyl glycol, and cyclohexanedimethanol are preferred because it is speculated that at a smaller number of carbon atoms between oxygen atoms of the diol component (a1), the resulting molecular chains are not excessively flexible and are less likely to transmit a gas. In particular, ethylene glycol is most preferred.

### (Dicarboxylic acid (a2))

Regarding the polyester diol (a0) used in the present invention, specific examples of a dicarboxylic acid component include aliphatic dicarboxylic acids, such as succinic acid, adipic acid, azelaic acid, sebacic acid, and dodecanedicarboxylic acid, alicyclic polyvalent carboxylic acids, such as 1,3-cyclopentanedicarboxylic acid and 1,4-cyclohexanedicarboxylic acid, aromatic polyvalent carboxylic acids, such as ortho-phthalic acid, terephthalic acid, isophthalic acid, pyromellitic acid, trimellitic acid, 1,4-naphthalenedicarboxylic acid, 2,5-naphthalenedicarboxylic acid, 2,6-naphthalenedicarboxylic acid, naphthalic acid, biphenyldicarboxylic acid, 1,2-bis(phenoxy)ethane-p,p'-dicarboxylic acid, and anhydrides and esterifiable derivatives of these dicarboxylic acids; and p-hydroxybenzoic acid, p-(2-hydroxyethoxy)benzoic acid, and esterifiable derivatives of these dihydroxycarboxylic acids. These polybasic acids may be used separately or in combination as a mixture of two or more. Furthermore, acid anhydrides thereof may also be used.

Among these compounds, in order to provide gas barrier properties to some extent, succinic acid, 1,3-cyclopentanedicarboxylic acid, ortho-phthalic acid, ortho-phthalic anhydride, 4-methylphthalic anhydride, and isophthalic acid are preferred. In particular, ortho-phthalic acid and its anhydride are more preferred. The skeleton thereof has an asymmetric structure. This seemingly inhibits the rotation of a molecular chain of a polyester to be produced, thereby providing good gas barrier properties. The resulting polyester is amorphous because of the asymmetric structure. This seemingly provides sufficient adhesion to a substrate, thereby resulting in good adhesive strength and good gas barrier properties. Furthermore, ortho-phthalic acid and its anhydride are characterized by having high solubility in a solvent, which is essential when the resulting polyester is used as a dry laminate adhesive. Thus, a high solid content is easily achieved, and good handleability is also provided.

### (Polyhydric alcohol: other components)

The polyester diol (a0) used in the present invention is produced by polycondensation of the diol component (a1) and the dicarboxylic acid (a2). It is permissible to use a small amount of a polyhydric alcohol component having three or more hydroxy groups as only a small part of a raw material alcohol. Examples of a compound therefor include glycerol, trimethylolpropane, trimethylolethane, tris(2-hydroxyethyl)isocyanurate, 1,2,4-butanetriol, pentaerythritol, and dipentaerythritol. To prevent gelation during the synthesis, a trihydric alcohol is preferred as a tri- or higher-hydric alcohol. The content of the trihydric alcohol is preferably 2% by mole or less with respect to the total amount of the alcohol component.

### (Method for synthesizing polyester diol (a0))

The polyester diol (a0) used in the present invention is synthesized by a commonly known method in which a dicarboxylic acid or its anhydride and a diol component are fed together and then the mixture is heated under stirring to perform a dehydration condensation reaction. A specific example will be described below. After a diol component and a dicarboxylic acid or its anhydride serving as raw materials are fed together, the mixture is heated under stirring to perform dehydration condensation reaction. At this time, each of the raw materials may be reacted stepwise. The hydroxyl value may be adjusted within ±5% while the diol component evaporated at the reaction temperature is added thereto. The polyester diol used in the present invention has a molecular weight of 400 to 3000, which is lower than those of common dry laminate adhesives. This shortens the time required for the synthesis, thereby reducing the cost of the synthesis process.

### (Acid value and hydroxyl value of polyester diol (a0))

In the present invention, the polyester diol (a0) preferably has a hydroxyl value of 35 to 290 mgKOH/g and an acid value of 0 to 5 mgKOH/g. The hydroxyl value may be measured by a method for measuring a hydroxyl value described in JIS K0070. The acid value may be measured by a method for measuring an acid value described in JIS K0070. At an acid value more than 5 mgKOH/g, among molecules of the polyester diol, molecules each containing a hydroxy group at an end are increased. Thus, a urethane extension reaction is less likely to occur, thereby possibly failing to provide sufficient initial shear strength. At a hydroxyl value less than 35 mgKOH/g, the viscosity is increased because of an excessively high molecular weight. When a high solid content is achieved, good coating suitability is not provided. At a hydroxyl value more than 300 mgKOH/g, the molecular weight is excessively small. Thus, the crosslink density of a cured coating film is excessively high, thereby failing to provide good adhesive strength.

### (Catalyst for reaction)

Examples of a catalyst used for the reaction include acid catalysts, such as tin-based catalysts, e.g., monobutyltin oxide and dibutyltin oxide, titanium-based catalysts, e.g., tetraisopropyl titanate and tetrabutyl titanate, and zirconia-based catalysts, e.g., tetrabutyl zirconate. The titanium-based catalysts, such as tetraisopropyl titanate and tetrabutyl titanate, and the zirconia-based catalysts, which have high activity in an esterification reaction, are preferably used in combination. The amount of the catalyst used is 1 to 1000 ppm and preferably 10 to 100 ppm with respect to the total mass of the raw materials used for the reaction. At an amount less than 1 ppm, the effect of the catalyst is less likely to be provided. At an amount more than 1000 ppm, a subsequent urethanization reaction tends to be inhibited. When the reaction proceeds without using a catalyst, the synthesis may be performed without using a catalyst.

### (Molecular weight of polyester diol (a0))

The polyester diol (a0) used in the present invention is required to have a number-average molecular weight of 400 to 3000. When the molecular weight is within this range, even in the case of a high-solid adhesive, in which the total mass of the resin composition for an adhesive is large, a good balance is achieved between adhesive performance and various laminating operations. The polyester diol (a0) preferably has a number-average molecular weight of 500 to 2800 and more preferably 600 to 2500.

The polyester diol (a0) may be allowed to react with a diisocyanate compound to perform urethane extension, in advance. In this case, the number-average molecular weight after the urethane extension is required to be 400 to 3000.

### (Curing agent)

A curing agent used in the present invention is required to be a mixture of the tri- or higher-valent polyisocyanate compound (b1) having an aromatic ring in its molecule and the polyisocyanate compound (b2) having no aromatic ring in its molecule. The reason for this is that even in the case of the polyester diol (a0) having a number-average molecular weight of 400 to 3000, which is smaller than those of common dry laminate adhesives, good coating laminate properties and laminate strength are achieved.

### (Tri- or higher-valent polyisocyanate compound (b1) having aromatic ring in its molecule)

A polyfunctional isocyanate has the function of three-dimensionally crosslinking the polyester diol (a0) serving as a base material to cure the adhesive for bonding. Thus, if the tri- or higher-valent polyisocyanate compound (b1) having an aromatic ring in its molecule is not contained as a curing agent component, an adhesive layer can disadvantageously delaminate under heat application conditions, such as boiling and retort treatment. The number of functional groups of the polyfunctional isocyanate is not particularly limited. A tri- or higher-functional isocyanate may serve as a polyfunctional isocyanate used as a crosslinking material. Thus, a commonly available trivalent polyisocyanate is preferably used.

### (Polyisocyanate compound (b2) having no aromatic ring in its molecule)

The present invention is characterized in that the polyisocyanate compound (b1), serving as a curing agent, having an aromatic ring in its molecule and the polyisocyanate compound (b2) having no aromatic ring in its molecule are used in combination. For a conventional polyisocyanate having an aromatic ring, a cured coating film is hard, so that it is difficult to provide good adhesion strength. In contrast, the combined use of the polyisocyanate compound (b2) having no aromatic ring in its molecule, in particular, a diisocyanate having, for example, an allophanate structure, results in a flexible coating film while barrier properties are maintained. This improves adhesion to a metal-based substrate, for example, aluminum foil, an aluminum-deposited film, or a transparent deposited film, and also improves the barrier properties.

As the polyisocyanate compound (b2) having no aromatic ring in its molecule used in the present invention, it is possible to preferably use a compound selected from the group consisting of at least one diisocyanate selected from hexamethylene diisocyanate, isophorone diisocyanate, norbornane diisocyanate, and hydrogenated products of meta-xylene diisocyanate, toluene diisocyanate, methylphenylethane diisocyanate, and naphthalene-1,5-diisocyanate; reaction products (allophanate group-containing polyisocyanates) with monovalent alcohols; and reaction products with alcohols each having two hydroxy groups.

### (Mixing ratio of tri- or higher-valent polyisocyanate compound (b1) having an aromatic ring in its molecule to polyisocyanate compound (b2) having no aromatic ring in its molecule)

The mixing ratio of the tri- or higher-valent polyisocyanate compound (b1) having an aromatic ring in its molecule to the polyisocyanate compound (b2) having no aromatic ring in its molecule is not necessarily determined because it depends on the molecular weight of the polyester diol (a0), the tri- or higher-valent polyisocyanate compound (b1) having an aromatic ring in its molecule, and the polyisocyanate compound (b2) having no aromatic ring in its molecule, and the valence of the tri- or higher-valent polyisocyanate compound (b1) having an aromatic ring in its molecule. From the viewpoint of providing the effects of these isocyanates, when one of them is used in an excessively small amount, the fundamental properties of an adhesive can be degraded. For example, an excessively small amount of the polyisocyanate compound (b2) having no aromatic ring in its molecule can result in a coating film with insufficient flexibility to cause a trouble, such as adhesion failure. An excessively small amount of the tri-or higher-valent polyisocyanate compound (b1) having an aromatic ring in its molecule can result in excessively low crosslink density to degrade resistance to boiling and retort suitability. Thus, the mixing ratio of the tri- or higher-valent polyisocyanate compound (b1) having an aromatic ring in its molecule to the polyisocyanate compound (b2) having no aromatic ring in its molecule is preferably in the range of 1:5 to 10:1 and more preferably 1:3 to 5:1 in terms of isocyanate content.

### (Type of tri- or higher-valent polyisocyanate compound (b1) having aromatic ring in its molecule)

An example of the tri- or higher-valent polyisocyanate compound (b1) having an aromatic ring in its molecule is a compound selected from the group consisting of at least one of a monomer and an oligomer of a compound selected from meta-xylene diisocyanate, toluene diisocyanate, and methylphenylethane diisocyanate, and reaction products of these isocyanates with alcohols each having two or more hydroxy groups.

Examples of the tri- or higher-valent polyisocyanate compound include adducts produced by allowing an excessive amount of an isocyanate monomer to react with a polyfunctional alcohol, such as a low-molecular-weight active hydrogen compound, e.g., trimethylolpropane, glycerol, pentaerythritol, erythritol, sorbitol, diethanolamine, triethanolamine, or an alkylene oxide adduct thereof, or a high-molecular-weight active hydrogen compound, e.g., a polyester resin, a polyether polyol, or a polyamide.

Specifically, in order to impart gas barrier properties to a barrier adhesive layer in the present invention, aromatic isocyanates, such as xylylene diisocyanate, toluene diisocyanate, and diphenylmethane diisocyanate, are preferred. Meta-xylylene diisocyanate is most preferred. Polyfunctional derivatives prepared from these isocyanate compounds may also be used.

The resin (A) and the curing agent of the polyisocyanate (B) are preferably mixed together in such a manner that the ratio (equivalence ratio) of the hydroxy groups in the resin (A) to the reaction component in the curing agent is in the range of 1/0.5 to 1/10 and more preferably 1/1 to 1/5. When the curing agent component is used in an amount excessively larger than the range, an excess of the curing agent component is left and can bleed from the adhesive layer after bonding. An insufficient amount of the curing agent component can lead to insufficient adhesive strength.

### (Biological component for adhesive)

The resin component of the adhesive of the present invention preferably contains a non-petroleum component, in particular, a plant-derived component, because in this case, it has a higher level of environmental friendliness in addition to low emission of VOCs. In particular, regarding monomers for the synthesis of the resin (A), plant-derived components of, for example, ethylene glycol, glycerol, propylene glycol, and butylene glycol, serving as the polyvalent alcohol components, and succinic acid serving as the polyvalent carboxylic acid are commercially available at an industrial level. These monomers are particularly preferably used because of its high gas barrier function.

### (Adhesive: other components)

The adhesive of the present invention may contain various additives as long as lamination suitability is not impaired. Examples of the additives include inorganic fillers, such as silica, alumina, aluminum flakes, and glass flakes, coupling agents, stabilizers (e.g., antioxidants, thermal stabilizers, and ultraviolet absorbing agent), plasticizers, antistatic agents, lubricants, antiblocking agents, colorants, fillers, and crystal nucleating agents.

### (Plate-like inorganic compound)

To particularly impart a high gas barrier function, the adhesive of the present invention may contain a plate-like inorganic compound. The use of the plate-like inorganic compound distinctively improves the laminate strength and the barrier properties owing to the plate-like shape. Regarding the plate-like inorganic compound used in the present invention, examples of the plate-like inorganic compound include hydrous silicates (such as phyllosilicate minerals); kaolinite-serpentinite-group clay minerals (such as halloysite, kaolinite, endellite, dickite, nacrite, antigorite, and chrysotile); the pyrophyllite-talc group (pyrophyllite, talc, and kerolite); smectite-group clay minerals (such as montmorillonite, beidellite, nontronite, saponite, hectorite, sauconite, and stevensite); vermiculite-group clay minerals (such as vermiculite); mica and mica-group clay minerals (such as mica, e.g., muscovite and phlogopite, margarite, tetrasilicic mica, and taeniolite); the chlorite group (such as cookeite, sudoite, clinochlore, chamosite, and nimite); hydrotalcite; plate-like barium sulfate; boehmite; and aluminum polyphosphate. These minerals may be naturally-occurring clay minerals or synthetic clay minerals.

Electric charges between layers do not significantly directly affect the barrier properties. Ionic inorganic compounds have very poor dispersibility in resins. An increase in the amount added degrades the coating suitability (thixotropic). In contrast, in the case of an uncharged inorganic compound, the coating suitability is ensured even when the amount added is increased. Regarding the particle size, a particle size more than about 1 µm readily results in the barrier properties. A particle size of the order of nanometers does not result in good barrier properties. At an excessively large particle size, in the case of gravure printing and so forth, the plate-like inorganic compound does not enter an intaglio plate, thus failing to provide coating suitability. The particle size is preferably in the range of 1 to 100 µm and more preferably 1 to 40 µm. The average particle size in the present invention indicates a particle size whose frequency of appearance is maximum when a particle size distribution of a plate-like inorganic compound is measured with a light-scattering measurement apparatus.

The plate-like inorganic compound used in the present invention preferably has a high aspect ratio from the viewpoint of improving a barrier performance due to a labyrinth effect of gas component molecules. Specifically, the aspect ratio is preferably 3 or more, more preferably 10 or more, and most preferably 40 or more. The content of the plate-like inorganic compound is, but not limited to, preferably 50% by mass or less. The reason for this is as follows: At a content more than 50% by mass, a laminating operation is less likely to be easily performed. Furthermore, insufficient adhesive strength can be provided.

A known dispersion method may be employed as a method for dispersing the inorganic compound used in the present invention in an adhesive. Examples thereof include an ultrasonic homogenizer, a high-pressure homogenizer, a paint conditioner, a ball mill, a roll mill, a sand mill, a sand grinder, a Dyno mill, a Dispermat, a Nanomill, an SC mill, and a Nanomizer. Preferred examples of an apparatus configured to generate a higher shear stress include a Henschel mixer, a pressure kneader, a Banbury mixer, a planetary mixer, a two-roll mill, and a three-roll mill. These apparatuses may be used separately or in combination of two or more.

To improve acid resistance of an adhesive layer, a known acid anhydride may be further used as an additive. Examples of the acid anhydride include phthalic anhydride, succinic anhydride, het anhydride, himic anhydride, maleic anhydride, tetrahydrophthalic anhydride, hexahydrophthalic anhydride, tetrabromophthalic anhydride, tetrachlorophthalic anhydride, trimellitic anhydride, pyromellitic anhydride, benzophenonetetracarboxylic anhydride, 2,3,6,7-naphthalenetetracarboxylic dianhydride, 5-(2,5-oxotetrahydrofuryl)-3-methyl-3-cyclohexene-1,2-dicarboxylic anhydride, and styrene-maleic anhydride copolymers.

A compound having an oxygen-scavenging function or the like may be added as needed. Examples of the compound having an oxygen-scavenging function include low-molecular-weight organic compounds that react with oxygen, for example, hindered phenols, vitamin C, vitamin E, organophosphorus compounds, gallic acid, and pyrogallol; and compounds of transition metals, such as cobalt, manganese, nickel, iron, and copper.

To improve the adhesiveness to various film materials immediately after application, an adhesiveness-imparting agent, for example, a xylene resin, a terpene resin, a phenolic resin, a rosin resin, or a petroleum resin, may be added as needed. When the adhesiveness-imparting agent is added, the adhesiveness-imparting agent is preferably added in an amount of 0.01 to 5 parts by mass with respect to 100 parts by mass of the total amount of the cured resin component.

### (High solid adhesive)

In the adhesive of the present invention, the molecular weight of the resin (A) serving as a base material is smaller than those of general-purpose dry laminate adhesives. Thus, a high solid adhesive in which the total solid content of the resin (A) and the polyisocyanate (B) is 40% by mass or more with respect to the total mass of the adhesive is easily produced. Hereinafter, the solid content is sometimes referred to as a nonvolatile component.

A higher solid content (% by mass) of the adhesive with respect to the total amount of the adhesive is preferred from the viewpoint of reducing the environmental load because the use of an organic solvent is suppressed. Typically, a solid content more than 80% by mass is not preferred because of its excessively improved viscosity during coating.

A solid content of 40% by mass or less of the adhesive is not preferred from the viewpoint of reducing the environmental load because a volatile component contained therein needs to be removed, thus a large volume of an organic solvent used is recovered. Accordingly, the solid content is preferably in the range of 40 to 80% by mass.

### (Gas barrier function)

The adhesive of the present invention has a gas barrier function against various gases in the case where the resin (A) having two hydroxy groups is the polyester diol (a0) having substantially two hydroxy groups, the polyester diol (a0) being synthesized from the polyol component and the polycarboxylic acid component, and where the polyester diol (a0) contains a component prepared by polycondensation of the diol component (a1) and the dicarboxylic acid (a2) containing at least one of the ortho-oriented aromatic dicarboxylic acid and its anhydride, the diol component (a1) containing at least one selected from the group consisting of ethylene glycol, 1,3-propanediol, 1,4-butanediol, neopentyl glycol, and cyclohexanedimethanol. Examples of gases to be blocked include oxygen, water vapor, inert gases, alcohols, fragrance components, and various organic solvents.

### (Adhesive form)

The adhesive of the present invention needs to be a solvent-based form. A solvent for the adhesive may be used as a reaction medium during the production of the polyester polyol and the curing agent. The solvent may also be used as a diluent during application. Examples of the solvent that may be used include esters, such as ethyl acetate, butyl acetate, and cellosolve acetate; ketones, such as acetone, methyl ethyl ketone, isobutyl ketone, and cyclohexanone; ethers, such as tetrahydrofuran and dioxane; aromatic hydrocarbons, such as toluene and xylene; halogenated hydrocarbons, such as methylene chloride and ethylene chloride; dimethyl sulfoxide; and dimethylsulfonamide. Of these, ethyl acetate and methyl ethyl ketone are usually preferably used.

An adhesive for film lamination will be described below as an example of one specific application.

The adhesive of the present invention may be used as an adhesive for film lamination. The laminated multilayer film has good gas barrier properties and thus may be used as a gas barrier laminated film.

Films for lamination used in the present invention are not particularly limited. Thermoplastic resin films may be appropriately selected in accordance with the desired application. Examples of films for foods packaging include PET films, polystyrene films, polyamide films, polyacrylonitrile films, polyolefin films, such as polyethylene films (low-density polyethylene films (LLDPE), high-density polyethylene films (HDPE)) and polypropylene films (non-oriented polypropylene films (CPP), biaxially oriented polypropylene films (OPP)), polyvinyl alcohol films, and ethylene-vinyl alcohol copolymer films. They may be subjected to orientation treatment. The orientation treatment is typically performed by extruding a molten resin into a sheet using, for example, an extrusion film forming method and then performing simultaneous biaxial orientation or sequential biaxial orientation. In the case of the sequential biaxial orientation, typically, longitudinal orientation is first performed, and then transverse orientation is performed. Specifically, a method that combines longitudinal orientation using a difference in speed between rollers and transverse orientation using a tenter is often employed.

Porous substrates, such as paper, paperboard, coated paper, wood, and leathers, may also be used other than the films. In this case, the adhesive penetrates to the substrate. Thus, the amount of the adhesive applied needs to be increased.

The adhesive of the present invention may be preferably used as an adhesive for laminated films produced by bonding a plurality of the same or different resin films together. The resin films may be appropriately selected in accordance with the purpose. For example, when the laminated film is used as a packaging material, the following composite films may be preferably used as a food packaging material serving as a gas barrier film: a composite film including two layers that are an outermost layer and an innermost layer, the outermost layer being formed of a thermoplastic resin film composed of a resin selected from PET, OPP, and polyamide, and the innermost layer being formed of a thermoplastic resin film composed of a resin selected from non-oriented polypropylene (hereinafter, referred to as "CPP") and a low-density polyethylene (hereinafter, abbreviated as "LLDPE") film; a composite film including three layers that are an outermost layer, an intermediate layer, and an innermost layer, the outermost layer being formed of a thermoplastic resin film composed of a resin selected from, for example, PET, polyamide, and OPP, the intermediate layer being formed of a thermoplastic resin film composed of a resin selected from OPP, PET, and polyamide, and the innermost layer being formed of a thermoplastic resin film composed of a resin selected from CPP and LLDPE; and a composite film including four layers that are an outermost layer, a first intermediate layer, a second intermediate layer, and an innermost layer, the outermost layer being formed of a thermoplastic resin film composed of a resin selected from OPP, PET, and polyamide, the first intermediate layer being formed of a thermoplastic resin film composed of a resin selected from PET and nylons, the second intermediate layer being formed of a thermoplastic resin film composed of a resin selected from PET and polyamide, and the innermost layer being formed of a thermoplastic resin film composed of a resin selected from LLDPE and CPP.

To form an adhesive layer having no defects, such as cracking or cissing, film surfaces may be subjected to surface treatment, for example, flame treatment or corona discharge treatment, as needed.

The adhesive of the present invention is preferably subjected to aging after the formation of the laminated film. Regarding the aging conditions, in the case where a polyisocyanate is used as the curing agent, the aging is performed at a temperature in the range of room temperature to 80°C for 12 to 240 hours. During this period, the adhesive strength is obtained.

In the case of selecting the adhesive having a structure with the gas barrier properties in the present invention, in order to provide a higher barrier function, a film produced by laminating a vapor-deposited layer of a metal, such as aluminum, or a metal oxide, such as silica or alumina, or a barrier film that includes a gas-barrier layer composed of, for example, polyvinyl alcohol, an ethylene-vinyl alcohol copolymer, or vinylidene chloride, may be used in combination, as needed.

### EXAMPLES

The present invention will be specifically described below by examples and comparative examples. In these examples and comparative examples, the units "parts" and "%" are on a mass basis, unless otherwise specified.

### (Production example 1) Production example of resin (A): EGOPA(0.9K)

To a polyester reaction vessel equipped with a stirrer, a nitrogen gas inlet, a Snyder column, and a condenser, 80.12 parts of ethylene glycol, 148.12 parts of phthalic anhydride, and 0.02 parts of titanium tetraisopropoxide were fed. The mixture was gradually heated in such a manner that the temperature at a top portion of the rectifying tube did not exceed 100°C, and the internal temperature was maintained at 220°C. At the time when the acid value reached 1 mgKOH/g or less, the esterification reaction was terminated. Thereby, a polyester polyol "EGOPA(0.9K)" having a number-average molecular weight of 900 was produced. The hydroxyl value was 124.7.

### (Production example 2) Production example of resin (A): THEI(OPAEG)3

To a polyester reaction vessel equipped with a stirrer, a nitrogen gas inlet, a rectifying tube, a water separator, and so forth, 1136.5 parts of phthalic anhydride, 495.3 parts of ethylene glycol, 668.1 parts of tris(2-hydroxyethyl)isocyanurate, and titanium tetraisopropoxide in an amount corresponding to 100 ppm with respect to the total amount of the polyvalent carboxylic acid and the polyhydric alcohol were fed. The mixture was gradually heated in such a manner that the temperature at a top portion of the rectifying tube did not exceed 100°C, and the internal temperature was maintained at 220°C. At the time when the acid value reached 1 mgKOH/g or less, the esterification reaction was terminated, thereby producing a polyester polyol having a number-average molecular weight of about 860, a hydroxyl value of 195.4 mgKOH/g, and an acid value of 0.9 mgKOH/g. The numbers of functional groups per molecule of the resulting resin (A) are as follows in terms of design: hydroxy group: 3, carboxy group: 0.

### (Production example 3) Production example of resin (A): Gly(OPAEG)2MA

To a polyester reaction vessel equipped with a stirrer, a nitrogen gas inlet, a rectifying tube, a water separator, and so forth, 1316.8 parts of phthalic anhydride, 573.9 parts of ethylene glycol, 409.3 parts of glycerol, and titanium tetraisopropoxide in an amount corresponding to 100 ppm with respect to the total amount of the polyvalent carboxylic acid and the polyhydric alcohol were fed. The mixture was gradually heated in such a manner that the temperature at a top portion of the rectifying tube did not exceed 100°C, and the internal temperature was maintained at 220°C. At the time when the acid value reached 1 mgKOH/g or less, the esterification reaction was terminated, thereby producing a polyester polyol having a hydroxyl value of 339.9 mgKOH/g. Subsequently, the temperature was lowered to 120°C. To the polyester polyol, 421.8 parts of maleic anhydride was fed. The temperature was maintained at 120°C. At the time when the acid value reached about half the acid value calculated from the amount of maleic anhydride fed, the esterification reaction was terminated, thereby producing a polyester polyol having a number-average molecular weight of about 520, a hydroxyl value of 216.6 mgKOH/g, and an acid value of 96.2 mgKOH/g. The numbers of functional groups per molecule of the resulting resin (A) are as follows in terms of design: hydroxy group: 2, carboxy group: 1.

### (Production example 4) Production example of diisocyanate compound b1-a: allophanate group-containing polyisocyanate

To a 1-L reaction vessel equipped with a stirrer, a thermometer, a condenser, and a nitrogen gas inlet, 930 g of 1,6-hexamethylene diisocyanate (HDI), 50 g of hexanol, and 0.5 g of tris(tridecyl)phosphite were fed in a nitrogen atmosphere. A urethanization reaction was performed at 80°C for 2 hours.

Next, 0.05 g of bismuth octanoate serving as an allophanatization catalyst was added to the reaction mixture. After a reaction was performed at 100°C, 0.03 g of benzoyl chloride was added thereto to terminate the reaction.

The reaction time was 7 hours.

Then 960 g of the resulting reaction mixture was subjected to distillation with a thin-film distillation apparatus (degree of vacuum: 0.05 kPa, temperature: 140°C) to remove unreacted HDI, thereby providing 214 g of a pale yellow compound. The isocyanate group content of the compound was measured by a method for determining an isocyanate group content described in JIS K7301 and found to be 19.1%.

The free HDI content was 0.5%.

### (Curing agent)

The following were used as curing agents in the present invention.
- Takenate D110N: XDI-based polyisocyanate, non-volatile content: about 75% (manufactured by Mitsui Chemicals, Inc.)
- Takenate D-178N: an allophanate form of hexamethylene diisocyanate, non-volatile content: 100% (manufactured by Mitsui Chemicals, Inc.)
- Takenate 500: meta-xylylene diisocyanate, non-volatile content: 100% (manufactured by Mitsui Chemicals, Inc.)

- Duranate D101: HDI-based difunctional polyisocyanate, non-volatile content: 100% (manufactured by Asahi Kasei Chemicals Corp.)
- Diisocyanate compound b1-a: diisocyanate of production example 4
- Basonat HA300: an allophanate form of hexamethylene diisocyanate, non-volatile content: 100% (manufactured by BASF)
- Desmodur N3200: a biuret form of hexamethylene diisocyanate (manufactured by Sumika Bayer Urethane Co., Ltd.), non-volatile content: 100%

### (Additives)

The following were used as additives in the present invention.
- Z6040: 3-glycidyloxypropyltrimethoxysilane (manufactured by Dow Corning Toray Co., Ltd.)
- KBE 903: 3-aminopropyltriethoxysilane (manufactured by Shin-Etsu Chemical Co., Ltd.)

### (Others)

The following materials were used in the examples and the comparative examples.
- HM 6025: muscovite with an average particle size of 10 µm (manufactured by Heng Hao)
- BARRISURF HX: kaoline with an average particle size of 1.5 µm (manufactured by IMERYS)
- DIC DRY LX-703L: polyester polyol, non-volatile content: about 62%, Mn: about 7000, hydroxyl value: 11 mgKOH/g (manufactured by DIC Graphics Corporation)

### (Examples 1 to 8)

Solvent-based adhesives according to Examples 1 to 8 were prepared, the mixing ratios of materials being listed in Tables 1 and 2. Coating of the adhesives and lamination were performed by a method described below, thereby producing laminated films with the adhesives in the present invention.

### (Comparative examples 1 to 3)

Solvent-based adhesives according to Comparative examples 1 and 2 were prepared, the mixing ratios of materials being listed in Table 3. Coating of the adhesives and lamination were performed by a method described below, thereby producing laminated films with the adhesives in the present invention.

### (Coating method, aging method)

A coating and lamination test was performed on the solvent-based adhesives of the examples and the comparative examples with a dry laminator (400 m/m dry lamination test coater, manufactured by Musashino Kikai Co., Ltd). The test was performed under the following conditions: a gravure printing method, line speed: 60 m/minute, coating width: 30 cm, drying oven temperature: 60°C. In each of the examples and the comparative examples, the amount applied was about 5.0 g/m² (solid content). The resulting composite films were subjected to aging at 40°C for 3 days to cure the adhesives, thereby providing the laminated films.

Abbreviations in the tables indicate the following.

### (Base film)

- PET: E 51002, 12 µm, Toyobo Co., Ltd.
- Ny: Emblem ON-BC, 15 µm, Unitika Ltd.
- PET-SiO2: Techbarrier T, 12 µm, Mitsubishi Plastics, Inc.

### (Sealant film)

- CPP70: TorayfanNO ZK93KM, 70 µm, Toray Advanced Film Co., Ltd.
- PE: L-LDPE, TUX-HC, 60 µm, Tohcello Co., Ltd.
- VM-CPP: VM-CPP2203, 25 µm, Toray Advanced Film Co., Ltd.

### (Evaluation method)

### (1) Laminate strength

After the completion of the aging, each of the laminated films was cut into pieces each having a width of 15 mm in a direction perpendicular to a coating direction. The base film and the sealant film were separated from each other by a 180° peel method and a T-peel method using a Tensilon universal testing machine manufactured by Orientec Co., Ltd. at an ambient temperature of 25°C and a peel rate of 300 mm/minute. Tensile strength measured in this way was defined as laminate strength.

### (2) Heat seal strength

After the completion of the aging, the laminated films were stacked with the sealant film inside and then heat-sealed with a heat sealer (TP-201-B, Tester Sangyo Co,. Ltd.) including a seal bar with a width of 10 mm at 0.1 MPa for 1 second at 200°C for the CPP sealant, 180°C for PE, and 160°C for VM-CPP. Each of heat-sealed films was cut into pieces each having a width of 15 mm. The heat-sealed portion was peeled under the same conditions with the same test apparatus as those in bonding strength measurement (1). Tensile strength measured in this way was defined as heat seal strength. The unit of the bonding strength was N/15 mm.

### (3) Oxygen transmission rate

After the completion of the aging, the oxygen transmission rate of each of the laminated films was measured in accordance with JIS K7126 (equal pressure method) with an oxygen transmission rate measuring device OX-TRAN 1/50 manufactured by Mocon, Inc. in an atmosphere with a temperature of 23°C and a relative humidity of 0 %RH and a temperature of 23°C and a relative humidity of 90 %RH. The term "RH" indicates relative humidity.

### (4) Water vapor transmission rate

After the completion of the aging, the water vapor transmission rate of each of the laminated films was measured in accordance with JIS K7129 (infrared method) with a water vapor transmission rate measuring device PARMATRAN-W3/33MG manufactured by Mocon, Inc. in an atmosphere with a temperature of 40°C and a relative humidity of 90 %RH. The term "RH" indicates humidity.

Tables 1 and 2 list the compositions and the evaluation results of the adhesives of the examples. Table 3 lists the results of the comparative examples.

**[Table 1]**

| | | | Example 1 | Example 2 | Example 3 | Example 4 | Example 5 |
|---|---|---|---|---|---|---|---|
| Base material | HM6025 | | 32.7 | 32.7 | 32.7 | 32.7 | 32.7 |
| | EGOPA(0.9K) | | 39.4 | 39.4 | 39.4 | 39.4 | 39.4 |
| | Ethyl acetate | | 27.8 | 27.8 | 27.8 | 27.8 | 27.8 |
| Curing agent | Takenate D110N | | 26.2 | 24.0 | 21.5 | 15.9 | 12.7 |
| | Basonat HA300 | | 3.9 | 6.1 | 8.5 | 14.1 | 17.4 |
| Additive | Z6040 | | 0.1 | 0.1 | 0.1 | 0.1 | 0.1 |
| Diluent solvent | Ethyl acetate | | 45.0 | 45.0 | 45.0 | 45.0 | 45.0 |
| Total | | | 175.1 | 175.1 | 175.0 | 175.0 | 175.1 |
| Laminate strength N/15mm | Ny/PE | 180° | 10> | 10> | 10> | 10> | 10> |
| | | T | 2.6 | 4.0 | 3.0 | 3.7 | 4.6 |
| | PET/VM-CPP | 180° | 4.8 | 4.5 | 4.0 | 4.4 | 4.2 |
| | | T | 0.5 | 0.6 | 0.6 | 0.6 | 0.6 |
| | PET-SiO₂/CPP | 180° | 10> | 10> | 10> | 10> | 10> |
| | | T | film broken | film broken | film broken | film broken | film broken |
| Seal strength N/15mm | Ny/PE | | 47.5 | 48.5 | 45.5 | 46.0 | 48.5 |
| | PET/VM-CPP | | 8.5 | 7.5 | 9.4 | 8.9 | 8.8 |
| | PET-SiO₂/CPP | | 36.5 | 42.5 | 41.0 | 50.0 | 48.0 |
| Oxygen transmission rate cc/m²·day·atm | Ny/PE | 23°C/0% | 13.4 | 16.2 | 22.0 | 27.3 | 30.8 |
| | | 23°C/90 % | 21.3 | 23.3 | 26.4 | 30.9 | 32.6 |
| | PET/VM-CPP | 23°C/0% | 0.5 | 0.5 | 0.6 | 0.8 | 0.9 |
| | | 23°C/90 % | 0.5 | 0.5 | 0.6 | 0.8 | 0.9 |
| | PET-SiO₂/CPP | 23°C/0% | 0.1 | 0.1 | 0.1 | 0.1 | 0.2 |
| | | 23°C/90 % | 0.2 | 0.2 | 0.2 | 0.3 | 0.3 |
| Water vapor transmission rate g/m²·day | PET/VM-CPP | 40°C/90 % | 0.2 | 0.2 | 0.2 | 0.2 | 0.2 |

**[Table 2]**

| | | | Example 6 | Example 7 | Example 8 | Example 9 |
|---|---|---|---|---|---|---|
| Base material | BARRISURF HX | | 32.7 | 32.7 | 32.7 | - |
| | THEI(OPAEG)3 | | 39.4 | 39.4 | - | - |
| | GLY(OPAEG)2MA | | - | - | 39.4 | 39.4 |
| | Ethyl acetate | | 27.8 | 27.8 | 27.8 | 27.8 |
| Curing agent | Takenate D110N | | 24.0 | 24.0 | 24.0 | 24.0 |
| | Takenate D-178 | | 6.1 | - | - | - |
| | Duranate D101 | | - | 6.1 | - | - |
| | Diisocyanate compound b1-a | | - | - | 6.1 | 6.1 |
| Additive | Z6040 | | 0.2 | 0.2 | 0.2 | 0.2 |
| | KBE903 | | 0.1 | 0.1 | 0.1 | 0.1 |
| Diluent solvent | Ethyl acetate | | 45.0 | 45.0 | 45.0 | 45.0 |
| Total | | | 175.3 | 175.3 | 175.3 | 142.6 |
| Laminate strength N/15mm | Ny/PE | 180° | 10> | 10> | 10> | 10> |
| | | T | 4.1 | 3.9 | 4.0 | 5.1 |
| | PET/VM-CPP | 180° | 4.4 | 4.2 | 4.3 | 4.5 |
| | | T | 0.6 | 0.7 | 0.7 | 1.2 |
| | PET-SiO₂/CPP | 180° | 10> | 10> | 10> | 10> |
| | | T | film broken | film broken | film broken | film broken |
| Seal strength N/15mm | Ny/PE | | 47.0 | 49.0 | 50.0 | 53.0 |
| | PET/VM-CPP | | 8.0 | 7.5 | 8.2 | 10.2 |
| | PET-SiO₂/CPP | | 44.0 | 43.0 | 45.3 | 49.3 |
| Oxygen barrier cc/m²·day·atm | Ny/PE | 23°C/0% | 15.9 | 17.5 | 16.5 | 26.5 |
| | | 23°C/90% | 24.0 | 25.1 | 22.9 | 32.9 |
| | PET/VM-CPP | 23°C/0% | 0.5 | 0.5 | 0.5 | 0.9 |
| | | 23°C/90% | 0.5 | 0.5 | 0.5 | 1.0 |
| | PET-SiO₂/CPP | 23°C/0% | 0.1 | 0.1 | 0.1 | 0.2 |
| | | 23°C/90% | 0.2 | 0.2 | 0.2 | 0.2 |

**[Table 3]**

| | | | Comparative example 1 | Comparative example 2 | Comparative example 3 |
|---|---|---|---|---|---|
| Base material | HM6025 | | 32.7 | 32.7 | - |
| | EGOPA(0.9K) | | 39.4 | 39.4 | - |
| | Ethyl acetate | | 27.8 | 27.8 | - |
| | DIC DRY LX-703VL | | - | - | 150.0 |
| Curing agent | Takenate D110N | | 29.8 | 35.0 | - |
| | Takenate 500 | | 5.1 | - | - |
| | Desmodur N3200 | | - | - | 10.0 |
| Additive | Z6040 | | 0.1 | 0.1 | - |
| Diluent solvent | Ethyl acetate | | 45.0 | 45.0 | 180.0 |
| Total | | | 179.9 | 180.0 | 340.0 |
| Laminate strength N/15mm | Ny/PE | 180° | 10> | 10> | 10> |
| | | T | 1.8 | 1.5 | 5.9 |
| | PET/VM-CPP | 180° | 1.1 | 1.0 | 3.0 |
| | | T | 0.1> | 0.1> | 1 |
| | PET-SiO₂/CPP | 180° | 10> | 10> | 10> |
| | | T | 0.2 | 0.2 | film broken |
| Seal strength N/15mm | Ny/PE | | 41.5 | 35.2 | 50.0 |
| | PET/VM-CPP | | 9.2 | 7.9 | 9.8 |
| | PET-SiO₂/CPP | | 25.5 | 20.5 | 47.5 |
| Oxygen barrier cc/m²·day·atm | Ny/PE | 23°C/0% | 12.8 | 14.8 | 67.3 |
| | | 23°C/90% | 10.0 | 12.2 | 52.3 |
| | PET/VM-CPP | 23°C/0% | 0.4 | 0.5 | 4.6 |
| | | 23°C/90% | 0.3 | 0.4 | 4.5 |
| | PET-SiO₂/CPP | 23°C/0% | 0.1 | 0.1 | 0.5 |
| | | 23°C/90% | 0.1 | 0.1 | 0.4 |
| Water vapor transmission rate g/m²·day | PET/VM-CPP | 40°C/90% | 0.2 | 0.2 | 0.5 |

### Industrial Applicability

The adhesive of the present invention has industrial applicability as an environmentally friendly adhesive which contains a low-molecular-weight diol compound synthesized by simple operations and which achieves the low emission of VOCs during lamination.

Furthermore, the adhesive has gas barrier properties to some extent. Thus, the adhesive can be used for food packaging materials and used as, for example, an adhesive for film lamination or an adhesive for industrial materials with superior environmental friendliness.

## Claims

1. A resin composition for a gas barrier adhesive, the resin composition comprising a resin (A) having two or more hydroxy groups per molecule and a polyisocyanate (B) having two or more isocyanate groups,
wherein the polyisocyanate (B) is a mixture of a tri-or higher-valent polyisocyanate compound (b1) having an aromatic ring in its molecule and a polyisocyanate compound (b2) having no aromatic ring in its molecule.

2. The resin composition for a gas barrier adhesive according to claim 1, wherein the polyisocyanate compound (b2) is a diisocyanate compound.

3. The resin composition for a gas barrier adhesive according to claim 1, wherein the resin (A) has a main skeletal structure composed of a polyester, a polyester polyurethane, a polyether, or a polyether polyurethane.

4. The resin composition for a gas barrier adhesive according to any one of claims 1 to 3, wherein the resin (A) has an aromatic ring.

5. The resin composition for a gas barrier adhesive according to claim 4, wherein the resin (A) has a main skeletal structure composed of a polyester or a polyester polyurethane, and
an ortho-oriented aromatic dicarboxylic acid or its anhydride accounts for 70 to 100% by mass of the total amount of a polyvalent carboxylic acid component serving as a monomer component constituting the polyester.

6. The resin composition for a gas barrier adhesive according to claim 5, wherein the ortho-oriented aromatic dicarboxylic acid or its anhydride is at least one selected from the group consisting of ortho-phthalic acid and its anhydride, naphthalene-2,3-dicarboxylic acid and its anhydride, naphthalene-1,2-dicarboxylic acid and its anhydride, anthraquinone-2,3-dicarboxylic acid and its anhydride, and 2,3-anthracene dicarboxylic acid and its anhydride.

7. The resin composition for a gas barrier adhesive according to any one of claims 1 to 6, wherein the resin (A) is a polyester polyol (A1) having at least one carboxy group and two or more hydroxy groups, the polyester polyol (A1) being prepared by allowing a polyester polyol having three or more hydroxy groups to react with a carboxylic anhydride or a polycarboxylic acid.

8. The resin composition for a gas barrier adhesive according to claim 7, wherein the polyester polyol (A1) has a hydroxyl value of 20 to 250 and an acid value of 20 to 200.

9. The resin composition for a gas barrier adhesive according to any one of claims 1 to 6, wherein the resin (A) is a polyester polyol (A2) having a polymerizable carbon-carbon double bond in its molecule.

10. The resin composition for a gas barrier adhesive according to claim 9, wherein a monomer component constituting the polyester polyol (A2) and having a polymerizable carbon-carbon double bond contains maleic acid, maleic anhydride, or fumaric acid.

11. The resin composition for a gas barrier adhesive according to claim 9 or 10, wherein the proportion of a monomer component having a polymerizable carbon-carbon double bond is 5 to 60 parts by mass with respect to 100 parts by mass of the total amount of a monomer component constituting the polyester polyol (A2).

12. The resin composition for a gas barrier adhesive according to any one of claims 1 to 6, wherein the resin (A) is a polyester polyol (A3) represented by general formula (1) : 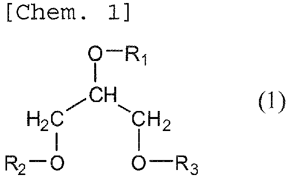 (where in formula (1), R₁ to R₃ each independently represent a hydrogen atom or a group represented by general formula (2) : 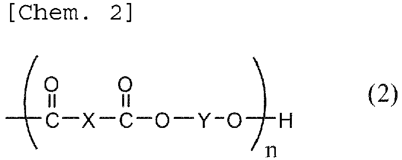 (where in formula (2), n represents an integer of 1 to 5, X represents an optionally substituted arylene group selected from the group consisting of a 1,2-phenylene group, a 1,2-naphthylene group, a 2,3-naphthylene group, a 2,3-anthraquinonediyl group, and a 2,3-anthracenediyl group, and Y represents an alkylene group having 2 to 6 carbon atoms), wherein at least one of R₁ to R₃ represents the group represented by general formula (2)).

13. The resin composition for a gas barrier adhesive according to claim 12, wherein 5% by mass or more of glycerol residues of the polyester polyol (A3) represented by general formula (1) are contained in an oxygen-barrier polyester resin composition.

14. The resin composition for a gas barrier adhesive according to any one of claims 1 to 6, wherein the resin (A) is a polyester polyol (A4) prepared by polycondensation of a polyvalent carboxylic acid component containing at least one of an ortho-oriented aromatic dicarboxylic acid and its anhydride and a polyhydric alcohol component containing at least one selected from the group consisting of ethylene glycol, propylene glycol, butylene glycol, neopentyl glycol, and cyclohexanedimethanol.

15. The resin composition for a gas barrier adhesive according to claim 14, wherein the ortho-oriented aromatic dicarboxylic acid or its anhydride is at least one of a polyvalent carboxylic acid and its anhydride selected from the group consisting of ortho-phthalic acid and its anhydride, naphthalene-2,3-dicarboxylic acid and its anhydride, naphthalene-1,2-dicarboxylic acid and its anhydride, anthraquinone-2,3-dicarboxylic acid and its anhydride, and 2,3-anthracene dicarboxylic acid and its anhydride.

16. The resin composition for a gas barrier adhesive according to any one of claims 1 to 6, wherein the resin (A) is a polyester polyol (A5) having an isocyanuric ring represented by general formula (3): 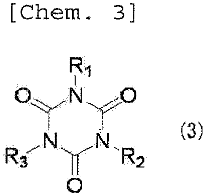 (where in general formula (3), R₁ to R₃ each independently represent -(CH₂)ₙ₁-OH (where n1 represents an integer of 2 to 4) or a group represented by general formula (4): 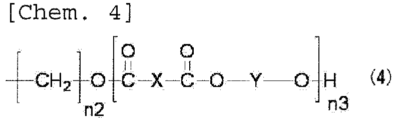 (where in general formula (4), n2 represents an integer of 2 to 4, n3 represents an integer of 1 to 5, X represents an optionally substituted arylene group selected from the group consisting of a 1,2-phenylene group, a 1,2-naphthylene group, a 2,3-naphthylene group, a 2,3-anthraquinonediyl group, and a 2,3-anthracenediyl group, and Y represents an alkylene group having 2 to 6 carbon atoms), wherein at least one of R₁, R₂, and R₃ represents a group represented by general formula (4)).

17. The resin composition for a gas barrier adhesive according to any one of claims 1 to 16, wherein the tri- or higher-valent polyisocyanate compound (b1) is selected from the group consisting of at least one of a monomer and an oligomer of a compound selected from meta-xylene diisocyanate, toluene diisocyanate, and methylphenylethane diisocyanate, and reaction products of these isocyanates with alcohols each having two or more hydroxy groups.

18. The resin composition for a gas barrier adhesive according to any one of claims 1 to 17, wherein the polyisocyanate compound (b2) having no aromatic ring in its molecule is selected from the group consisting of at least one diisocyanate selected from hexamethylene diisocyanate, isophorone diisocyanate, norbornane diisocyanate, and hydrogenated products of meta-xylene diisocyanate, toluene diisocyanate, methylphenylethane diisocyanate, and naphthalene-1,5-diisocyanate; reaction products (allophanate group-containing polyisocyanates) with monovalent alcohols; and reaction products with alcohols each having two hydroxy groups.

19. The resin composition for a gas barrier adhesive according to any one of claims 1 to 18, further comprising a plate-like inorganic compound.

20. The resin composition for a gas barrier adhesive according to claim 19, wherein the plate-like inorganic compound is nonionic between layers or non-swellable in water.

21. The resin composition for a gas barrier adhesive according to claim 19 or 20, wherein the plate-like inorganic compound contains particles having an average particle size of 0.1 µm or more.

22. An adhesive comprising the resin composition for a gas barrier adhesive according to claim 1 to 21.

23. A gas barrier film comprising the adhesive according to claim 22.
